# EUROPÄISCHE PATENTSCHRIFT

(11) **EP 2 996 826 B1**
(45) Veröffentlichungstag und Bekanntmachung des Hinweises auf die Patenterteilung: **18.09.2019**
(21) Anmeldenummer: 14730066.9
(22) Anmeldetag: 13.05.2014
(51) Int. Cl.: B21D 28/28, B21C 35/02

(54) **VERFAHREN UND EINRICHTUNG ZUM TRENNEN VON HOHLKAMMERPROFILEN**
METHOD AND SYSTEM FOR SEPARATING HOLLOW SECTIONS
PROCÉDÉ ET DISPOSITIF POUR SÉPARER DES PROFILÉS CREUX

(30) Priorität: 18.05.2013 DE 102013008632
(43) Veröffentlichungstag der Anmeldung: 23.03.2016
(73) Patentinhaber: Bruhnke, Ulrich, 71139 Ehningen (DE)
(72) Erfinder: ANDERSECK, Ralf, 84104 Rudelzhausen (DE)
(74) Vertreter: Helge, Reiner
(86) Internationale Anmeldenummer: PCT/DE2014/000245
(87) Internationale Veröffentlichungsnummer: WO 2014/187441

(56) Entgegenhaltungen:
- WO-A1-2006/022555
- DE-A1- 19 839 727
- DE-C1- 19 717 066
- JP-A- S57 181 729
- JP-A- S57 190 733

## Beschreibung

Die Erfindung betrifft ein Verfahren und eine Einrichtung zum formgebenden Trennen von Hohlkammerprofilen, ausgebildet als Doppelstegplatten/-profilen durch Stanzen nach dem Strangpressprozess zur Erzeugung einer vorgegebenen geometrischen Bauteilform.

Hohlkammerprofile aus Metall werden mittels Strangpressen hergestellt. Innerhalb des Hohlprofils befindliche Verstrebungen zur Versteifung des Hohlkammerprofils im Hinblick auf Torsionsbeanspruchung können im Strangpressvorgang mit gepresst werden.

In vielen Branchen werden Hohlkammerprofile - sogenannte Doppelstegplatten - als Tragelemente verwendet. Speziell im Automobilbau ist die Form nicht immer rechteckig oder quadratisch, sondern die Form muss entsprechend der Einbausituation angepaßt werden. Oft weisen diese eine komplizierte geometrische Form auf.

Bei der Herstellung von Formteilen müssen die Hohlkammerprofile mittels eines geeigneten Trennverfahrens auf Gebrauchslänge und in Form abgelängt werden. Dies erfolgt beispielsweise mittels sogenannter Strahlverfahren, wie beispielsweise Laserstrahlschneiden oder Wasserstrahlschneiden aber auch durch Konturfräsen. Diese Verfahren sind wesentlich teurer als eine Stanzoperation.
Der Zuschnitt solcher Körper ist problematisch, da die sie bildenden Stege hierbei nicht verbogen werden dürfen. Besonders dann, wenn die Körper quer zu ihrer Struktur geschnitten werden sollen, verformen die Schnittkräfte die Bereiche der Schnittstelle. Sind diese Profile entsprechend verbogen, sind sie außer Stande, im vollen Umfang Zug- oder Stützkräfte aufzunehmen, bzw. verlieren an den Anschlussstellen die durch die Hohlkammern gegebenen Widerstandsmomente.

Bekannt ist aus der Patentschrift DE 197 17 066 C1 ein Verfahren zum Trennen stranggepresster Hohlprofile und Strangpressvorrichtung. Hier wird direkt im Anschluss an den Pressvorgang das Innere des Strangpresshohlprofils zumindest an der bzw. den Trennstellen mit einem Leichtbauwerkstoff beispielsweise einer expansiven Schaummasse als Kernwerkstoff befüllt, welche beim Ablängen und Zuschneiden der Hohlkammerprofile die Trennbarkeit und Stabilitätseigenschaften verbessert.

Nachteilig ist hier eine Aufweitung und Zerstreuung des Trennstrahls bei dessen Eintritt in das Innere des Profils. Ferner ist durch die Einbringung des Kernwerkstoffes nachteilig, dass der vom Kernwerkstoff eingenommene Raum nicht anderweitig technisch nutzbar ist, gegebenenfalls Einfluß auf Wärmedämmwerte genommen wird, Brandschutzvorgaben tangiert werden können, der Kernwerkstoff sich bei der Weiterverarbeitung des Hohlraumprofils nachteilig auswirken kann und letztendlich zusätzliche Kosten für das Material des Kernwerkstoffes und dessen Einbringung entstehen.

Die JP S57 190 733 A, die die Basis für den Oberbegriff der Ansprüche 1 und 3 bildet, betrifft ein Pressverfahren und eine Vorrichtung, mit deren Hilfe abschnittsweise Material aus dem Rohrmaterial herausgetrennt wird. Die JP S57 181 729 A des gleichen Anmelders betrifft ein Verfahren zum Ausklinken von Materialabschnitten an langen hohlen Rohrmaterialien sowie eine Vorrichtung dafür.

Die WO 2006/022555 A1 betrifft ein Verfahren für die Verstärkung eines in einem Fahrzeug benutzten stoßabsorbierenden Elements und ein danach hergestelltes Element für den Stoßschutz. Das Element umfasst ein Hohlprofil mit Wänden und einen Innenraum. Die Herstellung zur Verstärkung erfolgt durch einen Einschnitt in einer Wand des Hohlprofils in Form einer Lippe und dem abschließenden Umbiegen dieser in den Innenraum.

Die DE 198 39 727 A1 betrifft ein Verfahren zur Herstellung eines Durchbruches in einem aus Wandabschnitten bestehenden Rohres und zeichnet sich durch die Verwendung eines Schneidstempelwerkzeuges zur Erzeugung eines Durchbruches aus, wobei das durch die Bildung des Durchbruches frei werdende Materialstück als Zunge in das Innere des Rohres gedrückt wird.

Der Erfindung liegt die Aufgabe zu Grunde, ein Verfahren und eine Einrichtung zum formgebenden Trennen stranggepresster Hohlkammerprofile, ausgebildet als Doppelstegplatten/-profilen, vorzuschlagen, mit welchem kostengünstig, bei Aufrechterhaltung der Hohlräume, stranggepresste Hohlkammerprofile auf Gebrauchslänge und in Form abgelängt werden, ohne dass die Kammern durch den Trennvorgang verformt werden und auf Grund dessen die durch die Hohlkammern gegebenen Widerstandsmomente negativ beeinflußt werden. Desweiteren werden Risse an den deformierten Stegen vermieden. Diese könnten sich durch Rißausbreitung bis zum Bauteilversagen weiterentwickeln.

Die Aufgabe der Erfindung wird erfindungsgemäß gelöst durch die im Anspruch 1 und im Anspruch 3 angegebenen Merkmale. Weitere Ausgestaltungen der Erfindung ergeben sich aus den Unteransprüchen sowie des nachfolgenden Ausführungsbeispiels.

Mittels des erfindungsgemäßen Verfahrens wird das formgebende Trennen von Hohlkammerprofilen im Wege eines Stanzvorganges idealerweise unmittelbar nach dem Strangpressprozess in einem Temperaturbereich oberhalb von 200 °C ermöglicht.

Jedoch läßt sich das Verfahren auch für bestimmte hoch-duktile Legierungen im Raumtemperaturbereich durchführen.

Das formgebende Trennen von Hohlkammerprofilen, ausgebildet als Doppelstegplatten/-profile zur Erzeugung einer vorgegebenen geometrischen Bauteilform erfolgt durch einen Stanzvorgang. Vor Beginn des Stanzvorganges wird in die einzelnen Hohlräume der Hohlkammerprofile ein oder mehrere Schieber als Hilfsschnittplatten eingefahren. Während des Stanzvorganges wird als erstes die obere Fläche zwischen den Stegen entlang der Hilfsschnittplatten durch die vordere Stanzkante des Stanzstempels durchtrennt und durch die in ihrer Höhe zurückgesetzte hintere Stanzkante umgebogen, wodurch die Hohlräume der Hohlkammerprofile verschlossen werden. Danach wird die untere Fläche mittels der zurückgesetzten hinteren Schneidkante und die Stege mittels der in den Unterbrechungen des Stanzstempels angeordneten Schneidkanten durchtrennt.

Die Einrichtung zur Durchführung des Verfahrens besteht im Wesentlichen aus einer Kopfplatte, einem Stanzstempel, einen oder mehreren Schiebern als Hilfsschnittplatte, die mittels einem Hydraulikzylinder in die Hohlräume der Hohlkammerplatten eingefahren werden können, Profilabstreifer, Schnittplatte und Bodenplatte. Sowohl die Schieber als auch der Stanzstempel sind entsprechend der zu erzeugenden geometrischen Form ausgebildet.

Der Stanzstempel weist eine vordere und eine hintere Stanzkante auf, wobei die hintere Stanzkante gegenüber der vorderen Stanzkante zurückgesetzt ausgebildet ist. Im Bereich der Stege bzw. der Wandungen der Hohlkammerprofile sind Unterbrechungen in Stanzstempel vorgesehen. In den Unterbrechungen sind Schneidkanten für die Stege bzw. Außenwandungen der Hohlkammerprofile vorgesehen, wobei diese gegenüber der vorderen und hinteren Schneidkante zurückgesetzt sind.

Anhand eines Ausführungsbeispiels soll die Erfindung näher beschrieben werden. Es zeigen
- Figur 1: - Doppelstegprofil
- Figur 2: - Endbeschnitt eines Doppelstegprofils
- Figur 3: - Seitenansicht Stanzstempel
- Figur 4: - Position I - Einlegen des Doppelstegprofils
- Figur 5: - Position II - Stanzschnitt 1 und Biegen
- Figur 6: - Position III - Stanzschnitt 2
- Figur 7: - Position IV - Abstreifen

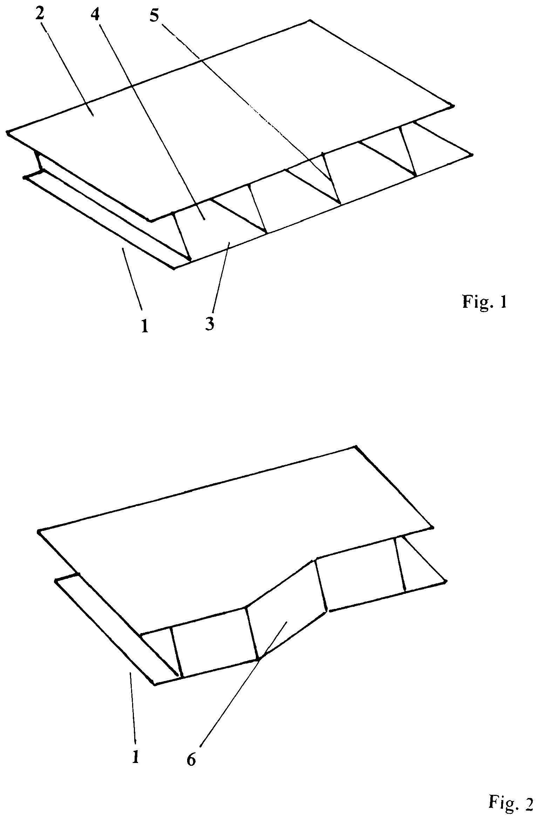

Die Figur 1 zeigt ein Hohlkammerprofil in Form eines Doppelstegprofils **1**, welches aus einer oberen zu stanzenden Fläche **2**, einer unteren zu stanzenden Fläche **3** mit dazwischenliegendem Hohlraum **4** nebst Stegen **5** besteht.

Die Figur 2 zeit eine Explosivdarstellung des Doppelstegprofils **1** mit einem typischen Endbeschnitt **6** eines Doppelstegprofils **1**.

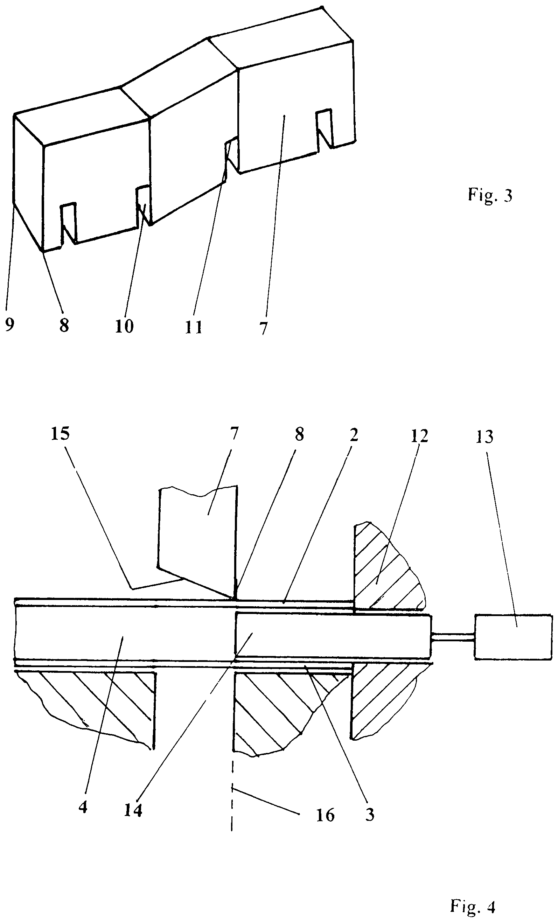

Die Figur 3 zeigt das Trennwerkzeug, den Stanzstempel **7**, mit den das Doppelstegprofil **1** stanzenden, in verschiedenen Ebenen jeweils an parallelen Seiten geschärften Stanzkanten **8, 9**, welcher je nach Konturgebrauchslänge in der Ausgestaltung unterschiedlich sein kann. Der Stanzstempel **7** weist eine vordere **8** und eine hintere Schneidkante **9** auf, wobei die hintere Schneidkante **9** gegenüber der vorderen Schneidkante **8** derart zurückgesetzt ist, dass die vordere Schneidkante **8** zuerst die obere Fläche **2** im Bereich der Hilfsschneidplatte **14** durchtrennt und während des Herunterfahrens des Stanzstempels **7** die oberen Flächen **2** zwischen den Stegen **5** umbiegt, so dass die Hohlräume des Doppelstegprofils **1** verschlossen werden.

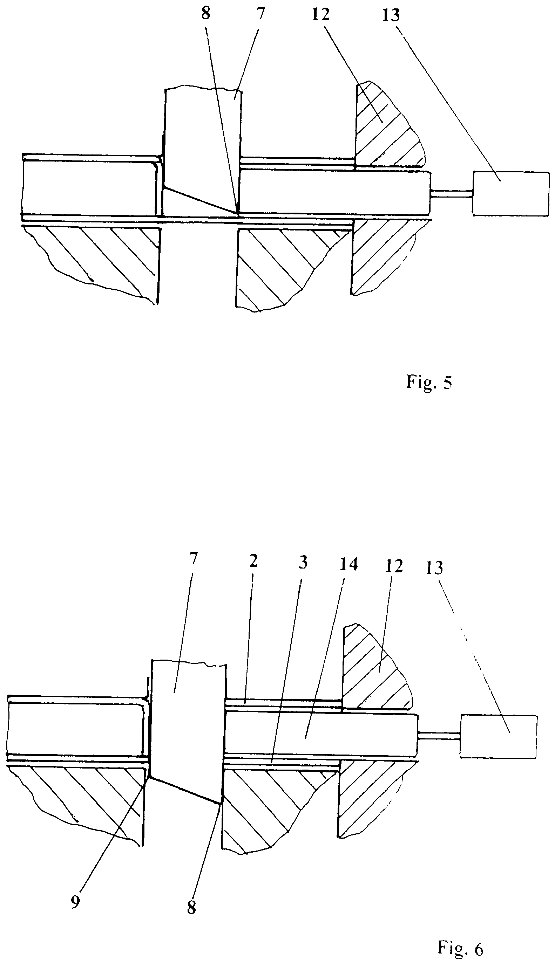

Nach dem Umbiegen der oberen Flächen **2** zwischen den Stegen erfolgt das Durchtrennen der Stege **5** mittels der an den Unterbrechungen **10** der vorderen **8** und hinteren Schneidkante **9** vorgesehenen Schneidkanten **11** des Stanzstempels **7** und das Durchtrennen der unteren Flächen **3** des Doppelstegprofils **1 -** (Figur 5 und 6).

Die Figur 4 zeigt die Einlegeposition des Doppelstegprofils **1** in die Einrichtung. Das Doppelstegprofil **1** wird mit der oberen Fläche **2** und der unteren Fläche **3** bündig gegen die Absteifplatte **12** geschoben und durch einen Niederhalter (nicht gezeichnet) in dieser Position fixiert. Sodann wird mittels eines Hydraulikzylinders **13** in Längsrichtung in den bzw. die Hohlräume **4** des Doppelstegprofils **1** eine Hilfsschneidplatte **14** soweit eingeführt, bis die vordere vertikale Fläche der Hilfsschneidplatte **14** mit der vorderen Stanzkante **8** des Stanzstempels **7** eine vertikale gedachte Linie **16** bilden.

Anschließend wird der Stanzstempel **7** in Richtung des Doppelstegprofils **1** verfahren, wobei die Stanzkante **8** des Stanzstempels **7** in die obere Fläche des Doppelstegprofils **1** eindringt und diese durchtrennt. Die bewegliche einfahrbare Hilfsschneidplatte **14** verhindert das Ausweichen der oberen Fläche des Doppelstegprofils **1** nach unten aufgrund des in Stanzrichtung ausgeübten Stanzdruckes. Der eingestanzte Bereich zwischen den Stegen **5** des Doppelstegprofils **1** wird mittels der im Winkel zur oberen Fläche **2** stehenden Fläche **15** des Stanzstempels **7** in Stanzrichtung abgebogen, wobei sich der Bereich ganz oder teilweise in Abhängigkeit der vorgegebenen Parameter in die Öffnung des Hohlraumes **4** der Doppelstegplatte **1** legt. (Figur 5)

Gleichzeitig wird mit den Schneidkanten **11** die zwischen der oberen und unteren Fläche senkrecht angeordneten Stege **5** durchtrennt.

Die Figur 6 zeigt den in Richtung unterer Fläche **3** weiter verfahrenden Stanzstempel **7**, nachdem dieser die untere Fläche **3** zunächst mit der Stanzkante **8** und danach mit der weiteren Stanzkante **9** durchtrennt.

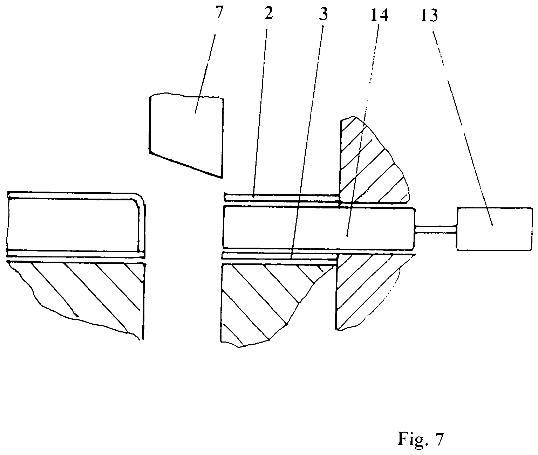

Die Figur 7 zeigt den nach der Durchtrennung der oberen Fläche **2** und unteren Fläche **3** wie auch der Stege **5** in die Ausgangsposition rückgefahrenen Stanzstempel **7** und auch die in die Ausgangsposition zurückgefahrene Hilfsschneidplatte **14**.

## Patentansprüche

1. Verfahren zum formgebenden Trennen von Hohlkammerprofilen, ausgebildet als Doppelstegplatten/-profile nach dem Strangpressprozess zur Erzeugung einer vorgegebenen geometrischen Bauteilform, wobei
das Trennen von Hohlkammerprofilen zur Erzeugung einer vorgegebenen geometrischen Bauteilform durch einen Stanzvorgang erfolgt,
**dadurch gekennzeichnet, dass**
während des Stanzvorganges eine vordere Schneidkante (8) eines Stanzstempels (7) zuerst eine obere Fläche (2) des Hohlkammerprofils (1) zwischen den Stegen (5) durchtrennt und mittels einer in Stanzrichtung zurückgesetzten hinteren Schneidkante (9) des Stanzstempels (7) diese Fläche (2) umgebogen und einzelne Hohlräume des Hohlkammerprofils verschlossen werden und während des Herunterfahrens des Stanzstempels (7) mittels der Schneidkanten (8, 9) eine untere Fläche (3) des Hohlkammerprofils (1) durchtrennt wird und anschließend mittels an Unterbrechungen (10) des Stanzstempels (7) und damit gegenüber den vorderen (8) und hinteren Stanzkanten (9) in Stanzrichtung zurückgesetzt vorgesehenen Schneidkanten (11) des Stanzstempels (7) das Durchtrennen der Stege (5) erfolgt.

2. Verfahren nach Anspruch 1,
**dadurch gekennzeichnet, dass**
vor Beginn des Stanzvorganges in die einzelnen Hohlräume (4) der Hohlkammerprofile Hilfsschneidplatten (14) eingefahren werden.

3. Einrichtung zum formgebenden Trennen von Hohlkammerprofilen ausgebildet als Doppelstegplatten/-profile zur Erzeugung einer vorgegebenen geometrischen Bauteilform, bestehend aus einer Kopfplatte, einem Stanzstempel (7), einen oder mehreren in die Hohlräume der Hohlkammerprofile einfahrbaren Schiebern und einer Bodenplatte,
**dadurch gekennzeichnet, dass**
der Stanzstempel (7) eine vordere (8) und eine hintere Stanzkante (9) aufweist, wobei die hintere Stanzkante (9) gegenüber der vorderen Stanzkante (8) in Stanzrichtung zurückgesetzt ausgebildet ist und dass in der vorderen (8) der und hinteren Stanzkante (9) des Stanzstempels (7) im Bereich der Stege (5) bzw. der Wandungen der Hohlkammerprofile Unterbrechungen (10) angeordnet sind und dass in den Unterbrechungen (10) Schneidkanten (11) für die Stege (5) der Hohlkammerprofile angeordnet sind, wobei diese gegenüber den vorderen (8) und hinteren Stanzkanten (9) in Stanzrichtung zurückgesetzt sind.

4. Einrichtung nach Anspruch 3,
**dadurch gekennzeichnet, dass**
der Stanzstempel (7) entsprechend der zu erzeugenden geometrischen Form ausgebildet ist.

5. Einrichtung nach Anspruch 3 und 4,
**dadurch gekennzeichnet, dass**
in den Unterbrechungen (10) Schneidkanten (11) für die Stege (5) der Hohlkammerprofile angeordnet sind, wobei diese gegenüber den vorderen (8) und hinteren Stanzkanten (9) zurückgesetzt sind.

## Claims

1. Method for the shaping separation of hollow chamber profiles, formed as twin wall sheets/profiles by an extrusion process, to produce a predetermined geometric component shape, wherein
the separation of hollow chamber profiles for the production of a given geometric component form is realised by a punching operation,
**characterised in that**,
during punching, a front cutting edge (8) of a punch (7) first cuts through the upper surface (2) of the hollow chamber profile (1) between the webs (5) and, by means of a rear cutting edge (9) of a punch (7) set back in the punching direction, the surface (2) is bent back to close off individual cavities of the hollow chamber profile and, during the lowering of the punch (7), the lower surface (3) of the hollow chamber profile (1) is cut by means of the cutting edges (8, 9) before the webs (5) are cut by means of the cutting edges (11) of the punch (7) provided at the interruptions (10) in the punch (7) and, on the opposing side, at the front (8) and back (9) punch edges set back in the punching direction.

2. Procedure according to claim 1,
**characterised in that**,
before starting the punching process, auxiliary cutting plates (14) are driven into the individual cavities (4) of the hollow chamber profiles.

3. Device for the separation shaping of hollow chamber profiles in the form of twin wall sheets/profiles for producing a predetermined geometric component shape, comprising a head plate, a punch (7), one or more sliders which can be inserted into the chambers of the hollow chamber profiles and a base plate,
**characterised in that**
the punch (7) has a front (8) and rear punch edge (9), the rear punch edge (9) being set back in the punching direction with respect to the front punch edge (8), and **in that** interruptions (10) are arranged in the front (8) and rear punch edge (9) of the punch (7) in the area of the webs (5) or walls of the hollow chamber profiles, and **in that** cutting edges (11) for the webs (5) of the hollow chamber profiles are arranged in the interruptions (10), these being set back in the punching direction with respect to the front (8) and rear punching edges (9).

4. Device according to claim 3,
**characterised in that**
the punch (7) is formed according to the geometric shape to be produced.

5. Device according to claims 3 and 4,
**characterised in that**
cutting edges (11) for the webs (5) of the hollow chamber profiles are arranged in the interruptions (10), these being set back with respect to the front (8) and rear punching edges (9).

## Revendications

1. Procédé de séparation formatrice de profilés creux sous forme de plaques/profilés alvéolaires fabriqués par extrusion pour produire une forme géométrique prédéterminée d'un composant, dans lequel
la séparation des profilés creux pour la production d'une forme de composant géométrique donnée est réalisée par poinçonnage,
**caractérisé en ce que**,
pendant l'opération de poinçonnage, une arête de coupe avant (8) d'un poinçon (7) coupe d'abord une surface supérieure (2) du profilé creux (1) entre les âmes (5) et **en ce que** cette surface (2) est repliée et certaines cavités du profilé creux (7) sont fermées au moyen d'une arête de coupe arrière (9) du poinçon (7) décalée dans la direction du poinçonnage, et que, lors de la descente du poinçon (7), la surface inférieure (3) du profilé creux (1) est coupée par les arêtes de coupe (8, 9) pour ensuite couper les âmes (5) au moyen des arêtes de coupe (11) du poinçon (7) prévues au niveau des interruptions (10) du poinçon (7) et, en face, des arêtes de coupe avant (8) et arrières (9) décalées dans la direction de poinçonnage.

2. Procédure selon la revendication 1,
**caractérisé en ce que**,
avant de commencer le processus de poinçonnage, des plaques de coupe auxiliaires (14) sont insérées dans les cavités individuelles (4) des profilés creux.

3. Dispositif pour séparation formatrice de profilés creux sous forme de plaques/profilés alvéolaires pour la fabrication d'une pièce de forme géométrique prédéterminée, comprenant une plaque frontale, un poinçon (7), une ou plusieurs glissières qui peuvent être enfoncées dans les cavités des profilés creux et une plaque de base,
**caractérisé en ce que**
le poinçon (7) dispose d'une arête de poinçonnage avant (8) et d'une arête de poinçonnage arrière (9), l'arête arrière (9) étant décalée dans la direction de poinçonnage par rapport à l'arête avant (8), et **en ce que** des interruptions (10) sont disposés dans les arêtes de poinçonnage avant (8) et arrière (9) du poinçon (7) au niveau des âmes (5) et des internes des profilés creux et **en ce que** des arêtes de coupe (11) pour les âmes (5) des profilés creux sont disposées dans les interruptions (10), celles-ci étant décalées dans la direction de poinçonnage par rapport aux arêtes avant (8) et arrière (9).

4. Dispositif selon la revendication 3,
**caractérisé en ce que**
le poinçon (7) est formé conformément à la forme géométrique à produire.

5. Dispositif selon les revendications 3 et 4,
**caractérisé en ce que**
des arêtes coupantes (11) pour les âmes (5) des profilés creux sont disposées dans les interruptions (10), celles-ci étant en retrait par rapport aux arêtes de poinçonnage avant (8) et arrières (9).
